# EUROPÄISCHE PATENTSCHRIFT

(11) **EP 1 584 452 B1**
(45) Veröffentlichungstag und Bekanntmachung des Hinweises auf die Patenterteilung: **02.11.2011**
(21) Anmeldenummer: 05002759.8
(22) Anmeldetag: 10.02.2005
(51) Int. Cl.: B29D 22/00, B29C 69/00, F04D 13/02, F04D 13/06, B29C 70/30, B29C 70/86, B29C 53/14, B29C 57/00

(54) **Verfahren zum Herstellen eines formstabilen, hohlkörperförmigen Elementes mit einem Bodenbereich und Verwendung eines solchen Elementes**
Process for forming a formstable hollowlike element having a bottom and use of such an element.
Procédé pour le formage d'un élément creux de forme stable pourvu d'un fond et utilisation d'un tel élément

(30) Priorität: 08.04.2004 DE 102004017418
(43) Veröffentlichungstag der Anmeldung: 12.10.2005
(73) Patentinhaber: GRUNDFOS A/S, 8850 Bjerringbro (DK)
(72) Erfinder: Hansen, Jorn Toftegaard, 8600 Silkeborg (DK); Nielsen, Tonny Ring, Birgittelyst 8800 Viborg (DK); Orsnaes, Morten Vammen, 8850 Bjerringbro (DK); Langgaard, Gunnar, 8800 Viborg (DK); Andreasen, Bjorn V., 8850 Bjerringbro (DK)
(74) Vertreter: Vollmann, Heiko

(56) Entgegenhaltungen:
- EP-A2- 0 060 157
- EP-A2- 0 667 668
- CH-A- 478 650
- DE-A1- 19 625 797
- DE-B- 1 217 600
- US-A- 3 408 439
- US-A- 4 079 755

## Beschreibung

Die Erfindung betrifft ein Verfahren zum Herstellen eines formstabilen, hohlkörperförmigen Elementes mit einem Bodenbereich.

Aus der nächstkommenden US-A-3408439 ist bekannt, Gummimaterial um einen Dorn zu wickeln und ihn dann mit parallel zueinander liegenden Fasern zu verstärken. Nach erfolgter Verformung des Materials wird der Gummi vulkanisiert, um ein Diaphragma mit einem hochelastischen Wandbereich und einer festen Basis zu erhalten. Dieses Teil kann nicht für ein formstabiles Element hergenommen werden.

Es ist weiterhin allgemein praktizierter Stand der Technik, durch Tiefziehen eines Metalls oder durch Kunststoffspritzgießen ein z. B. rohrförmiges Element mit einem Bodenbereich an seinem einen Ende herzustellen. Ein solches Element kann zum Beispiel als Spaltrohrtopf für einen elektrischen Nasslaüfmotör oder als Trennkalotte in einem elektromagnetischen Antriebsmotor verwendet werden, beispielsweise zum Antreiben einer Kreiselpumpe. Das Element wird in der Regel aus einem Eisenmetall tiefgezogen oder aus Kunststoff spritzgegossen. Eine solche Herstellungsweise ist besonders teuer, weil insbesondere die Werkzeuge zu ihrer Herstellung für die Durchführung des Tiefziehverfahrens bzw. des Spritzgießens außerordentlich hohe Werkzeugkosten verursachen. Diese Kosten sind daher nur dann annehmbar, wenn größere Stückzahlen an Elementen erforderlich sind. Weil jedoch zunehmend auch kleinere Stückzahlen gewünscht werden, zum Beispiel für elektrische Motoren zum Antreiben von in kleineren Mengen benötigten Kreiselpumpen, ist ein Bedarf an einem kostengünstigeren Herstellungsverfahren für das Herstellen von insbesondere Spaltrohrtöpfen und Trennkalotten für elektrische Antriebsmotoren für Kreiselpumpen vorhanden. Des Weiteren weisen Spaltrohrtöpfe und Trennkalotten, wenn sie aus Kunststoff hergestellt sind, oft eine zu geringe mechanische Dauerfestigkeit auf, was zu einem vorzeitigen Verschleiß dieser Hohlkörperelemente und damit zu einem verfrühten Funktionsausfall der Motoren und Aggregate, in welchen diese Elemente eingebaut sind, führt.

Die Aufgabe der Erfindung besteht darin, ein Verfahren zum Herstellen eines formstabilen, hohlkörperförmigen Elementes mit einem Bodenbereich zur Verfügung zu stellen, welches Verfahren im Vergleich zu herkömmlichen Herstellungsverfahren erhebliche Kostenvorteile für seine Durchführung, insbesondere in Bezug auf kleine Seriengrößen, bietet und welches es erlaubt, Hohlkörperelemente mit erhöhter mechanischer Festigkeit herzustellen.

Die Lösung dieser Aufgabe ist in dem Anspruch 1 angegeben.

Mit dem erfindungsgemäßen Verfahren ist es möglich, auf kostengünstigere Weise als bisher ein formstabiles, z. B. rohrförmiges Element herzustellen, wobei sich das Verfahren besonders für mengenmäßig kleinere Serienherstellung eignet. Das ist dadurch begründet, dass die hohen Kosten für das Anfertigen von Werkzeugformen für entsprechende Tiefzieh- und Spritzgießwerkzeuge entfallen. Des Weiteren ist das erfindungsgemäße Verfahren selbst auf einfache Weise und mit einfachen Mitteln durchführbar, weil nur einfache und meistens bereits vorhandene Werkzeuge verwendet werden können. Ein weiterer Vorteil besteht darin, dass mit dem erfindungsgemäßen Verfahren aus Kunststoff hergestellte formstabile Elemente in Hohlkörperform auch für höhere mechanische Festigkeitsansprüche geeignet sind, so dass solche Elemente z. B. als so genannte Spaltrohrtöpfe oder Trennkalotten für elektrische Motoren, die zum Beispiel zum Antreiben von insbesondere Kreiselpumpen verwendet werden, eingesetzt werden können. Andere Beispiele für die erfindungsgemäß hergestellten Elemente sind Gehäuseteile für viele Zwecke, insbesondere Kopf- und Fußgehäuseteile für mehrstufige Kreiselpumpen.

Das Gewebematerial bzw. das Vliesmaterial ist ein Hybridmaterial, das z. B. Glasfaser als einen nicht warm formbaren Materialanteil und z. B. Polypropylenfaser als einen warm formbaren Materialantell enthält.

Das Verengen des auf die erforderliche Länge gebrachten Schlauchstückes an einer gewünschten Stelle kann auf einfache Weise durch Verdrehen des Schlauchstückes in sich um seine Längachse erfolgen, wodurch das Verengen automatisch eintritt. Alternativ kann das Verengen aber auch durch Anbringen eines Ringes oder einer Fadenverknotung an der gewünschten Stelle des Schlauchstückes erfolgen.

Als eine vorteilhafte Temperatur zur Durchführung des Erwärmungs- und Abkühlungsschrittes des vorgeformten Schlauchstückes hat sich eine Temperatur von 200° C bis 400° C herausgestellt.

In einer vorteilhaffen Ausführung des erfindungsgemäßen Verfahrens kann das Verengen des Schlauchstückes im Bereich seiner Längsmitte durchgeführt werden, wodurch zwei im Wesentlichen gleich lange Längenabschnitte des Schlauchstückes entstehen. Hierbei wird der eine Längenabschnitt über den anderen Längenabschnitt gestülpt, um ein doppellagiges Schlauchstück zu bilden. Dabei kann des Weiteren so vorgegangen werden, dass an dem nicht verengten Endbereich des verengten Schlauchstückes ein ringförmiges Anschlussbauteil mit einem zylindrischen Abschnitt eingesetzt wird, derart, dass sich der zylindrische Abschnitt dieses Bauteiles zwischen den beiden übereinander gestülpten Längenabschnitten des Schlauchstückes befindet.

In einer anderen Weitergestaltung kann im Bereich der Verengungsstelle des Schlauchstückes zur Ausbildung eines axialen Durchganges im Bodenbereich eines hohlkörperförmigen Elementes ein hülsenförmiges Bauteil eingesetzt werden, derart, dass das Zentrum dieses Bauteils mit der Längsmittelachse des herzustellenden Elementes zusammen fällt. Dieses Bauteil kann beispielsweise eine Lagerbuchse sein und aus Metall oder Kunststoff bestehen.

Nach der vorstehend beschriebenen Weise kann insbesondere ein sogenannter Spaltrohrtopf für einen elektrischen Nasslaufmotor hergestellt werden, welcher Motor wiederum zum Antreiben von Kreiselpumpen eingesetzt werden kann. Ein solcher Spaltrohrtopf ist somit ein Verbund-Baüteil und in Bezug auf seine Wandflächen flüssigkeitsdicht und erfüllt im Übrigen aufgrund der entsprechenden Materialauswahl für das Gewebe- oder Vliesmaterial als Verstärkungseinlage auch die geforderten höheren mechanischen Festigkeitswerte. Entsprechendes gilt z. B. auch für eine so genannte Trennkalotte, die üblicherweise für einen Magnetantrieb verwendet wird.

Weitere Vorteile der Erfindung ergeben sich aus den Unteransprüchen und aus der nachstehenden Beschreibung eines Ausführungsbeispieles, welches in den anliegenden Zeichnungen schematisch dargestellt ist. Darin zeigen:
- Figur 1: eine Seitenansicht eines Schlauchstückes,
- Figur 2: eine Seitenansicht des Schlauchstückes nach dem ersten Verfahrensschritt,
- Figur 3: eine Seitenansicht auf das Schlauchstück nach einem weiteren Verfahrensschritt,
- Figuren 4, 5 und 6: jeweils einen Axialschnitt zur Darstellung noch weiterer Verfahrensschritte,
- Figur 7: einen Axialschnitt durch einen Spaltrohrtopf für einen elektrischen Antriebsmotor, wobei der Spaltrohrtopf gemäß dem erfindungsgemäßen Verfahren herstellbar ist.
- Figur 8: einen Axialschnitt durch eine Trennkalotte für einen Elektromagnetantrieb, wobei die Trennkalotte gemäß dem erfindungsgemäßen Verfahren herstellbar ist.

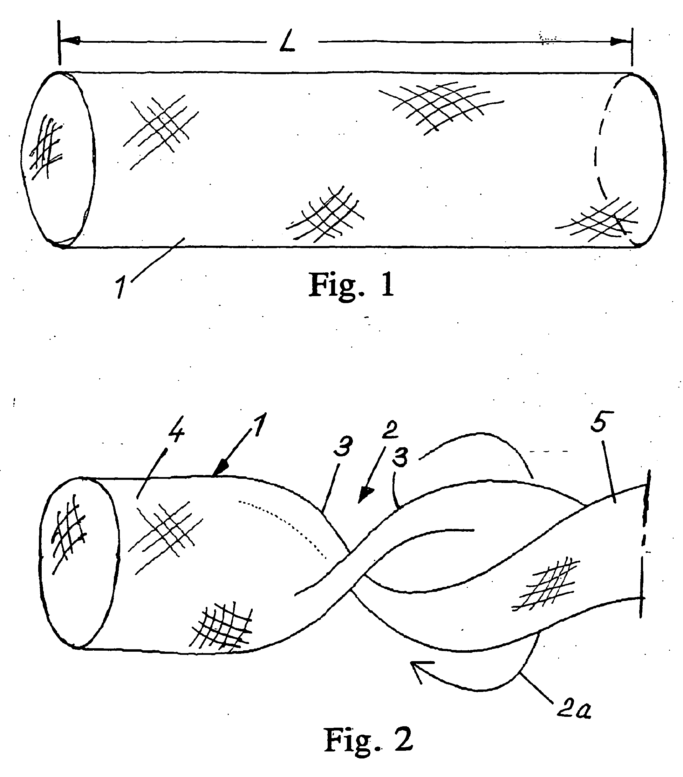

Zunächst sind die Grundlagen des erfindungsgemäßen Verfahrens anhand der vereinfachten Darstellungen in den Figuren 1, 2 und 3 erläutert. Zuerst wird ein Schlauchstück 1 aus nachgiebigem Gewebe- oder Faservliesmaterial vorgesehen, welches Material später mit wenigstens einer Schicht aus einem warm formbaren Kunststoff versehen werden kann, wobei die Länge L des Schlauchstückes 1 in Abhängigkeit von dem Längenmaß des fertigen hohlkörperförmigen Elementes gewählt wird. Dieses Längenmaß L ist verständlicherweise davon abhängig, für welchen Einsatzzweck das Element gedacht ist.

Das Schlauchstück 1 vorbestimmter Länge wird anschließend an einer Stelle 2 zwischen seinen Enden verengt. Ein solches Verengen kann gemäß Figur 2 durch Verdrehen eines Längenabschnittes des Schlauchstückes um seine Längsachse gemäß dem Pfeil 2a erfolgen, beispielsweise um mindestens 60° - 180°. Wie es aus Figur 2 ersichtlich ist, bewirkt ein Verdrehen eine automatische Verengung des Schlauchstückes an der Stelle 2. Die Wirkung des Verengens bzw. Verdrehens besteht steht darin, dass eine mindestens teilweise Vorbildung eines Bodenbereiches 3 für das spätere, fertige Element entsteht, der Bodenbereich also geschlossen ist oder ein zentrales Loch aufweist, wie weiter unten klar wird. Gleichzeitig werden durch das Verengen bzw. Verdrehen z.B. zwei Längenabschnitte 4 und 5 des Schlauchstückes 1 gebildet. Je nachdem, an welcher Stelle 2 ein Verengen des Schlauchstückes 1 erfolgt, ergeben sich entsprechend lange Längenabschnitte 4 und 5. Eine bevorzugte Stelle 2 des Schlauchstückes 1 befindet sich in der Längsmitte des Schlauchstückes, so dass zwei im Wesentlichen gleich lange Längenabschnitte 4 und 5 gebildet werden.

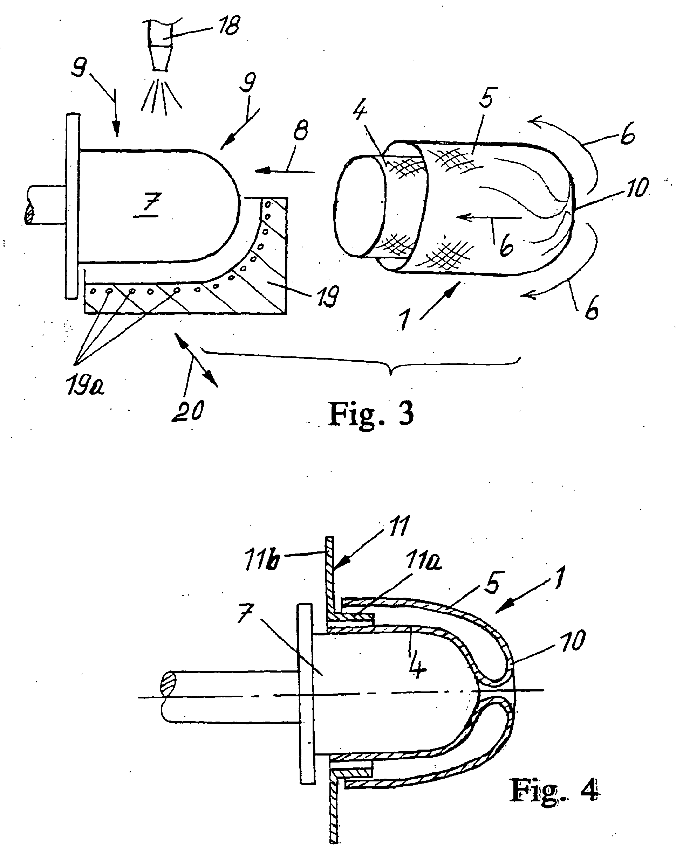

Der nächste Verfahrensschritt besteht nach Figur 3 darin, dass der eine Längenabschnitt 5 gemäß den Pfeilen 6 über den anderen Längenabschnitt 4 gestülpt wird, wodurch eine gewisse Vorform eines Topfes ausgebildet wird. Um diese Vorform des Schlauchstückes 1 in eine endgültige Vorform zu bringen, wird vorzugsweise ein Formwerkzeug 7, z.B. ein Dom, verwendet, auf welches bzw. auf welchen das doppellagig geformte Schlauchstück 1 gemäß dem Pfeil 8 aufgeschoben wird. Auf diese Weise entsteht die endgültige Vorform z. B. einer Topfform des Schlauchstückes 1. Es versteht sich, dass die AuBenform des Formwerkzeuges 7 bzw. des Domes derjenigen Innenform entspricht, welche das fertige, rohrförmige Element aufweisen soll. Die Verfahrensschritte nach den Fig. 1 und 2 können auch miteinander kombiniert werden, Indem das Verengen bzw. Verdrehen dann erfolgt, wenn ein Längenabschnitt 4 des Schlauchstückes bereits auf das Werkzeug 7 geschoben worden ist.

Nachdem das doppellagig vorgeformte Schlauchstück 1 auf dem Formwerkzeug 7 seine Topfform erhalten hat, wird diese Topfform durch Anwendung von Wärme und anschließendes Abkühlen in Verbindung mit dem Aufbringen eines warm formbaren Kunststoffmaterials und in Verbindung mit einem bereits im Schlauchstück 1 vorhandenen, nachgiebigen und warm formbaren Kunststoffmaterial gesichert bzw. stabilisiert, Hierzu wird das auf dem Formwerkzeug befindliche Schlauchstück mit Wärme rundherum bestrahlt wird, wie es mit 9 in Figur 3 schematisch angedeutet ist. Die Wärmeanwendung kann auch auf eine andere Art erfolgen, beispielsweise durch innere Erwärmung des Werkzeuges 7 oder in einem Ofen. Eine bevorzugte Erwärmungstemperatur umfasst einen Bereich von etwa 200° C bis 400° C. Hierdurch schmilzt das warm formbare Kunststoffmaterial und schließt das nicht warm formbare Material des Schlauchstückes 1 in sich als Verstärkungseinloge ein. Nach einer angemessenen Zeit der Erwärmung erfolgt das Abkühlen in geeigneter Weise, so dass ein Verbund-Bauteil entstanden ist.

Nach dem Abkühlen des formstabilisierten Elementes wird dieses von dem Formwerkzeug 7 abgenommen und kann dann seiner Endbearbeitung zugeführt werden. Diese Endbearbeitung kann darin bestehen, dass die endgültige Länge des hohlkörperförmigen Elementes 1 zB. durch Beschneiden hergestellt wird und dass in dem Bodenbereich 10 des Elementes eine zentrale Bohrung vorgesehen wird.

Das Gewebematerial oder das Vliesmaterial ist ein Hybridmaterial und besteht es aus einem nicht warm verformbaren Faseranteil aus z. B. Glasfaser oder Kohlefaser und aus einem warm verformbaren Foseranteil aus thermoplastischen oder duroplastischen Fasern, z. B. aus Polypropylen, Potypropylensulfid oder Polyester.

Das Gewebematerial oder das Vilesmaterial kann nachträglich, also nach seiner Formgebung auf dem Formwerkzeug 7. noch mit wenigstens einer Kunststoffschicht versehen werden.

Der Begriff "nicht warm formbares Material" ist so zu verstehen, dass es sich hierbei um ein Material handelt, dessen Schmelzpunkt so hoch ist, dass dieses Material während der Wärmeanwendung zur Durchführung des erfindungsgemäßen Verfahrens nicht schmilzt. Dagegen ist der Begriff "warm formbares Material" so zu verstehen, dass es sich bei diesem Material um ein solches handelt, das in dem weiter vorstehend angegebenen Temperaturbereich für die Wärmeanwendung schmelzflüssig ist bzw. wird. Dadurch bleibt der strukturelle Aufbau des nicht warm formbaren Materials als Gewebe oder Vlies während des Verfahrens erhalten und dieses Material wird so zur sicheren Erzielung eines Verbund-Bauteils in dem warm formbaren Material eingebettet.

Während der Wärmeanwendung auf den Vorformling auf dem Formwerkzeug 7 wird vorteilhaft auch eine Druckbelastung auf den Vorformling angewendet, um letztlich einen gut geformten, bezüglich seiner Wände sicher flüssigkeitsundurchlässigen und mechanisch hochfesten Formkörper zu erzielen. Dies kann mit einem mehrteiligen Druckwerkzeug erreicht werden, von dem nur ein Bauteil in Fig. 3 beispielsweise gezeigt und mit 19 bezeichnet ist. Dieses Druckwerkzeug, das beispielsweise gemäß dem Doppelpfeil 20 bewegbar ist, kann auch Heizmittel 19a für eine alleinige und/oder eine zusätzliche Wärmeanwendung für den vorstehend angeführten Zweck aufweisen.

Figur 4 zeigt einen ergänzenden Verfahrensschritt. Man erkennt, dass ein ringförmiges Anschlussbauteil 11 verwendet wird, welches an dem nicht verengten Endbereich des doppellagigen Schlauchstückes 1 vorgesehen ist. Dieses Anschlussbauteil 11 weist einen zylindrischen Abschnitt 11 a auf, der sich zwischen den beiden übereinander gestülpten Längenabschnitten 4 und 5 des Schlauchstückes 1 befindet. Nur zum besseren Verständnis sind die beiden Längenabschnitte 4 und 5 mit Abstand voneinander und vom Abschnitt 11 a des Anschlussbauteils 11 gezeigt; in Wirklichkeit liegen alle diese Teile natürlich aneinander an. Des Weiteren weist das Anschlussbauteil einen radialen Abschnitt 11b auf, beispielsweise in Form eines Flansches, mit welchem das fertige Element in einer größeren Baueinheit befestigt werden kann, beispielsweise an einem Teil in einem elektrischen Antriebsmotor (nicht gezeigt). Dieses Anschlussbauteil kann aus Metall oder aus Kunststoff bestehen.

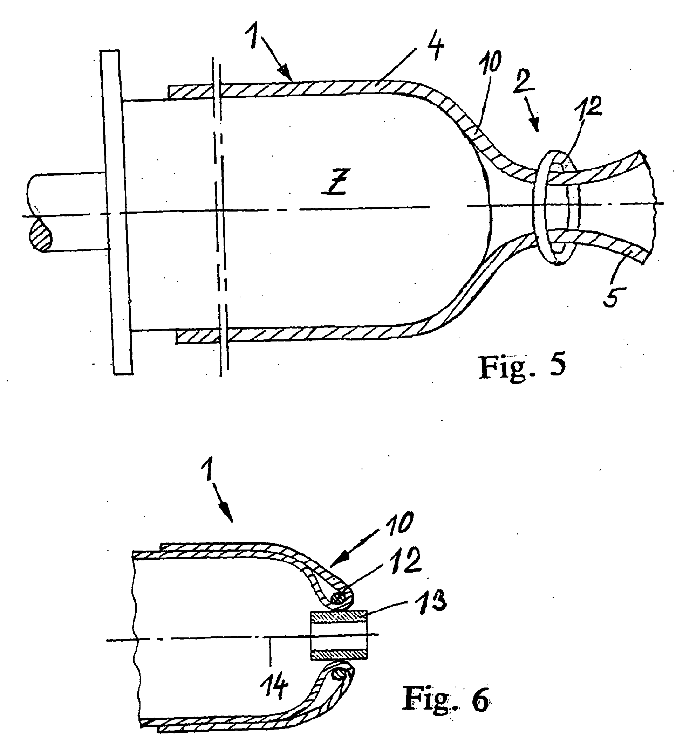

Figur 5 zeigt eine Alternative zum Verengen des Schlauchstückes an der Stelle 2. Man erkennt einen Ring 12, der beispielsweise als Clip ausgebildet sein kann. Durch Anwenden des Ringes 12 entfällt ein Verdrehen des Längenabschnittes 5 des Schlauchstückes 11. Des Weiteren kann durch Anwenden eines Ringes 12, oder auch mehrerer Ringe, gleichzeitig ein axialer Durchgang im späteren Bodenbereich 10 des topfförmigen Elementes geschaffen werden, wobei durch Wahl des Durchmessers des Ringes 12 bzw. der Ringe der Durchmesser des gewünschten axialen Durchganges im Wesentlichen festgelegt wird. Der Ring 12 kann, oder die Ringe können, aus Kunststoff oder auch aus Metall bestehen. Alternativ zur Ringanwendung kann auch eine Fadenverknotung (nicht gezeigt) angewendet werden, mit welcher in der Regel ein geschlossener Bodenbereich 10 entsteht.

Figur 6 zeigt eine weitere alternative Ausbildung eines rohrförmigen bzw. topfförmigen Elementes, das nach dem erfindungsgemäßen Verfahren hergestellt wird. Bei dieser Darstellung ist der besseren Übersicht wegen das Formwerkzeug 7 weg gelassen. Man erkennt, dass im Bodenbereich des doppellagig geformten Schlauchstückes 1 ein hülsenförmiges Bauteil 13 eingesetzt wird, derart, dass das Zentrum dieses Bauteiles mit der Längsmittelachse 14 des herzustellenden Elementes zusammen fällt. Dieses hülsenförmige Bauteil dient zur Ausbildung eines besonderen axialen Durchganges im Bodenbereich 10 des rohrförmigen Elementes. Bei der späteren Verwendung des fertig bearbeiteten Elementes kann das hülsenförmige Bauteil 13 dazu dienen, beispielsweise eine Motorwelle aufzunehmen. In diesem Fall wird das hülsenförmige Bauteil 13 vorteilhaft eine Lagerbuchse sein und aus einem entsprechenden Lagermetall bestehen. Hierfür kann ein Metall, aber auch ein Kunststoff gewählt werden.

Zusätzlich zum Vorsehen des hülsenförmigen Bauteiles 13 kann auch der vorstehend erwähnte Ring 12 (oder mehrere Ringe) verwendet werden, um das Schlauchstück 1 im Bereich des hülsenförmigen Bauteiles zu verengen. Gleichzeitig wird durch die Anwendung des Ringes 12 oder mehrerer Ringe bewirkt, dass das hülsenförmige Bauteil 13 in seiner Lage auch während des Herstellungsprozesses des topfförmigen Elementes gesichert wird.

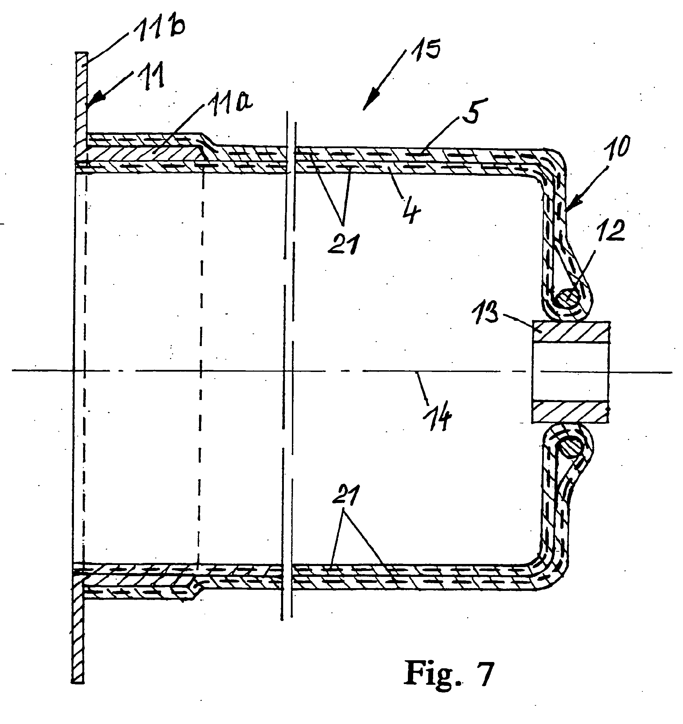

Figur 7 zeigt die beispielsweise Verwendung eines wie vorstehend beschrieben hergestellten Elementes, und zwar in Form eines Spaltrohrtopfes 15, der bei einem elektrischen Nasslaufmotor (nicht gezeigt) eingesetzt wird. Nasslaufmotoren werden bekannterweise zum Antrieb von Kreiselpumpen verwendet. Figur 7 zeigt die fertige Form des so genannten Spaltrohrtopfes 15. Man erkennt, dass im Bodenbereich 10 ein Bauteil 13 als Lagerbuchse eingesetzt ist, deren Mittelachse mit der Längsmittelachse des Spaltrohrtopfes 15 zusammen fällt und das zusätzlich mit einem Ring 12 im Bodenbereich 10 gesichert ist. Die übereinander liegend gezeigten Abschnitte 4 und 5, die im Wesentlichen die gesamte Umfangswand des Spaltrohrtopfes darstellen und in Wirklichkeit durch den Wärmeanwendungsschritt, ggf. in Verbindung mit einer zusätzlichen, warm formbaren Kunststoffschicht, flüssigkeitsdicht miteinander verschmolzen sind, weisen an ihrem anderen Ende das Anschlussbauteil 11 auf, das mit seinem axialen Abschnitt 11 a zwischen den Längenabschnitten 4 und 5 ortsfest integriert ist. In dem Spaltrohrtopf 15 sind also nach dem Erwärmen und dem Abkühlen die beiden Längenabschnitte 4 und 5 nicht mehr zu erkennen. Jedoch enthalten die Umfangswand und der Bodenbereich des Spaltrohrtopfes, welche durch die Längenabschnitte 4 und 5 gebildet worden sind, eine integrierte und bei der Wärmeanwendung erhalten gebliebene Verstärkung, die aus dem nicht warm verformbaren, beispielsweisen Glasfasermaterial des Gewebematerials oder des Vliesmaterials des Schlauchstückes gebildet ist. Diese Verstärkung ist in Fig. 7 gestrichelt angedeutet und mit 21 bezeichnet. Der Spaltrohrtopf ist somit ein Verbund-Bauteil.

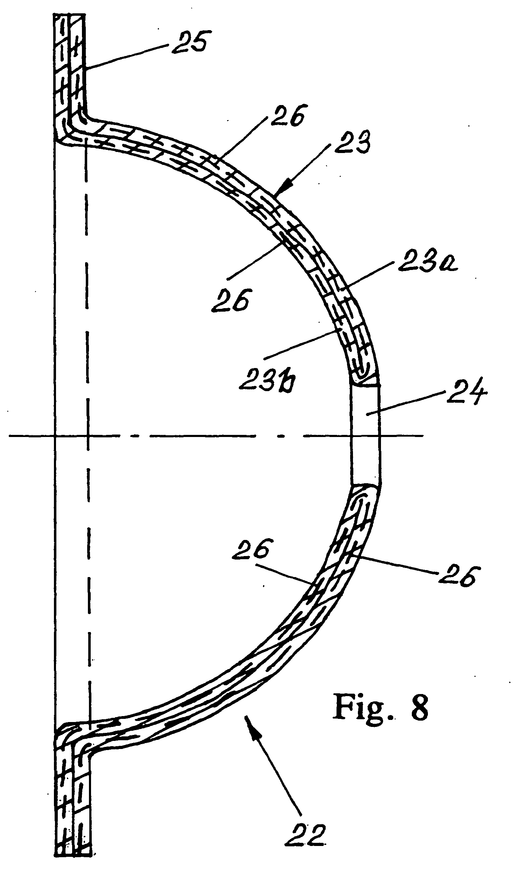

Fig. 8 zeigt eine so genannte Trennkalotte 22, die für einen so genannten Magnetantrieb verwendet wird, der in bekannter Weise elektrisch betrieben wird und ebenfalls zum Antreiben von Kreiselpumpen eingesetzt werden kann. Derartige Magnetantriebe sind z. B. in den beiden US-Patentschriften 3 803 432 und 4 043 706 beschrieben, auf die zum allgemeinen Verständnis dieser Antriebe hierdurch Bezug genommen wird. Darin sind die Trennkalotten (separating wall) mit 15 bzw. 3 beziffert.

Die topfförmige Trennkalotte 22 nach Fig. 8 der vorliegenden Patentanmeldung ist, abgesehen von ihrer Gestalt, grundsätzlich so aufgebaut, wie es in Verbindung mit dem Spaltrohrtopf 15 nach Fig. 7 erläutert ist, und so hergestellt, wie es in Verbindung mit den Figuren 1 bis 6 beschrieben ist. Nach ihrer Gestalt besteht die Trennkalotte aus einem hohlen, im Wesentlichen eine Topfform bildenden halbkugeligen Wandteil 23, der im hier gezeigten Fall aus zwei Wandschichten 23a und 23b aus z. B. Polypropylen gebildet worden ist, die aber nach der Wärmeanwendung zu einer einzigen Schicht miteinander verschmolzen sind, mit einem zentralen Durchgang 24 und mit einem umfangsmäßigen Flanschteil 25, der auch entfallen kann. Selbstverständlich weist die Trennkalotte nach ihrer Herstellung ebenfalls eine innere Verstärkung 26 aus einem nicht warm formbaren Material, z. B. Glasfaser oder Kohlefaser, auf und ist somit ein Verbund-Bauteil.

Das nach dem vorstehend beschriebenen Verfahren hergestellte hohlkörperförmige Element kann des Weiteren auch als Gehäuseteil für die verschiedensten Zwecke verwendet werden. Insbesondere sind solche Gehäuseteile als Kopfgehäuseteile und/oder als Fußgehäuseteile für mehrstufige Kreiselpumpen geeignet.

## Patentansprüche

1. Verfahren zum Herstellen eines formstabilen, hohlkörperförmigen Elementes mit einem Bodenbereich, mit den folgenden Verfahrensschritte:
a. Vorsehen eines Schlauchstücks aus einem nachgiebigen Gewebe- oder Faservliesmaterial,
b. Verengen des Schlauchstückes im Durchmesser an einer Stelle seiner Länge zur mindestens teilweisen Vorbildung des Bodenbereiches für dos hohlkörperförmige Element,
c. Vorformen des verengten Schlauchstückes in eine Topfform durch Aufbringen dieses Schlauchstückes auf ein Formwerkzeug, dessen Außenform der Innenform des hohlkörperförmigen Elementes entspricht, und
d. Formstabilisieren der vorgeformten Topfform des Schlauchstückes auf dem Formwerkzeug durch Erwärmen und Abkühlen des Schlauchstückes,
**dadurch gekennzeichnet, dass** als Gewebe- oder Faservliesmaterial ein Hybridmaterial verwendet wird, das einen nicht warm formbaren Faseranteil und einen warm formbaren Faseranteil aufweist.

2. Verfahren nach Anspruch 1, **dadurch gekennzeichnet, dass** der nicht warm formbare Foseranteil eine Glas- oder Kohlefaser Ist, und dass der warm formbare Faseranteil ein Polypropylen oder ein Polypropylensulfid in Faserform ist.

3. Verfahren nach Anspruch 1 oder 2, **dadurch gekennzeichnet, dass** die Kunststoffschicht, die auf das Gewebe- oder Faserviiesmateriai aufgebracht wird, durch Aufspritzen eines erwärmten thermoplastischen oder duroplastischen Kunststoffmaterials auf das hohlkörperförmige Schlauchstück und durch Druckanwendung auf das aufgespritzte Kunststoffmaterial hergestellt wird.

4. Verfahren nach einem der Ansprüche 1 bis 3, **dadurch gekennzeichnet, dass** das Verengen des Schlauchstückes durch Verdrehen wenigstens eines Längenabschnittes des Schlauchstückes um seine Längsachse erfolgt.

5. Verfahren nach einem der Ansprüche 1 bis 3, **dadurch gekennzeichnet, dass** das Verengen des Schlauchstückes durch Anbringen eines Ringes erfolgt.

6. Verfahren noch einem der Ansprüche 1 bis 3, **dadurch gekennzeichnet, dass** das Verengen des Schlauchstückes durch Anbringen einer Fadenverknotung erfolgt.

7. Verfahren nach einem der Ansprüche 1 bis 6, **dadurch gekennzeichnet, dass** das Verengen des Schlauchstückes im Bereich seiner Längsmitte durchgeführt wird, wodurch zwei Längenabschnitte des Schlauchstückes entstehen, und dass der eine Längenabschnitt über den anderen Längenabschnitt gestülpt wird, um ein doppellagiges Schlauchstück zu bilden.

8. Verfahren noch Anspruch 1, **dadurch gekennzeichnet, dass** das Erwärmen des hohlkörperförmig vorgeformten Schlauchstückes bei einer Temperatur von 200° C bis 400° C durchgeführt wird.

9. Verfahren nach einem der Ansprüche 1 bis 7, **dadurch gekennzeichnet, dass** im Bereich der Verengungsstelle des verengten Schlauchstückes zur Ausbildung eines axialen Durchganges im Bodenbereich des Elementes ein hülsenförmiges Bauteil eingesetzt wird, derart, dass das Zentrum dieses hülsenförmigen Bauteiles mit der Längsmittelachse des herzustellenden, hohlkörperförmigen Elementes zusammen fällt.

10. Verfahren nach Anspruch 9, **dadurch gekennzeichnet, dass** als hülsenförmiges Bauteil ein solches aus Metall oder Kunststoff verwendet wird.

11. Verfahren nach Anspruch 8 oder 9. **dadurch gekennzeichnet, dass** als hülsenförmiges Bauteil eine Lagerbuchse verwendet wird.

12. Verfahren nach Anspruch 7, **dadurch gekennzeichnet, dass** an dem nicht verengten Endbereich des verengten Schlauchstückes ein ringförmiges Anschlussbauteil mit einem zylindrischen Abschnitt eingesetzt wird, derart, dass sich dieser zylindrische Abschnitt zwischen den beiden übereinander gestülpten Längenabschnitten des Schlauchstückes befindet.

13. Verwendung des Verfahrens nach wenigstens einem der Ansprüche 1 bis 14 zur Herstellung eines formstabilen, hohlkörperförmigen Elementes mit einem Bodenbereich (10), als Spoltrohrtopf (15) für einen elektrischen Nasslaufmotor.

14. Verwendung des Verfahrens nach wenigstens einem der Ansprüche 1 bis 14 zur Herstellung eines formstabilen, hohlkörperförmigen Elementes mit einem Bodenbereich, als Trennkalotte (22) für einen elektrischen Magnetantriebsmotor.

## Claims

1. A method for the manufacture of a shape-stable, hollow-body-like element with a base region, with the following method steps:
a. providing a flexible tube piece from a compliant fabric material or fibre non-woven material,
b. narrowing the flexible tube piece in diameter at a location of its length for the at least partial preforming of the base region for the hollow-body-like element,
c. preforming the narrowed flexible tube piece into a pot shape by way of attaching this flexible tubing piece onto a forming tool, whose outer shape corresponds to the inner shape of the hollow-body-like element, and
d. shape-stabilising the preformed pot-shape of the flexible-tubing piece on the forming tool by way of heating and cooling the flexible-tube piece,
**characterised in that** a hybrid material is used as a fabric material or fibre non-woven material and this hybrid material comprises a fibre share which is not thermoformable and a fibre share which is thermoformable.

2. A method according to claim 1, **characterised in that** the fibre share which is not thermoformable is glass fibre or carbon fibre and that the fibre share which is thermoformable is a polypropylene or a polypropylene sulphide in fibre form.

3. A method according to claim 1 or 2, **characterised in that** the plastic layer which is deposited onto the fabric material or fibre non-woven material is manufactured by way of injecting a heated thermoplastic or duroplastic plastic material onto the hollow-body-like flexible tubing piece and by way of pressure application onto the injected-on plastic material.

4. A method according to one of the claims 1 to 3, **characterised in that** the narrowing of the flexible tubing piece is effected by way of rotating at least one length section of the flexible tubing piece about its longitudinal axis.

5. A method according to one of the claims 1 to 3, **characterised in that** the narrowing of the flexible tubing piece is effected by way of attaching a ring.

6. A method according to one of the claims 1 to 3, **characterised in that** the narrowing of the flexible-tubing piece is effected by way of incorporating a fibre knotting.

7. A method according to one of the claims 1 to 6, **characterised in that** the narrowing of the flexible tubing piece is carried out in the region of its longitudinal middle, by which means two longitudinal sections of the flexible tubing piece arise, and that the one longitudinal section is pushed over the other longitudinal section, in order to form a double-layered flexible tubing piece.

8. A method according to claim 1, **characterised in that** the heating of the hollow-body-like, preformed flexible-tubing piece is carried out at a temperature from 200°C to 400 °C.

9. A method according to one of the claims 1 to 7, **characterised in that** a sleeve-like component is inserted in the region of the narrowing location of the narrowed flexible tubing piece for forming an axial passage in the base region of the element, said insertion being in a manner such that the centre of this sleeve-like component coincides with the longitudinal middle axis of the hollow-body-like element to be manufactured.

10. A method according to claim 9, **characterised in that** as a sleeve-like component, such of metal or plastic is used.

11. A method according to claim 8 or 9, **characterised in that** a bearing bush is used as a sleeve-like component.

12. A method according to claim 7, **characterised in that** an annular connection component with a cylindrical section is applied on the non-narrowed end region of the narrowed flexible tubing piece, in a manner such that this cylindrical section is located between the longitudinal sections of the flexible tubing piece which are pushed over one another.

13. The use of the method according to at least one of the claims 1 to 14 for manufacturing a shape-stable, hollow-body-like element with a base region (10), as a canned cap (15) for an electrical wet-running motor.

14. The use of the method according to at least one of the claims 1 to 14 for manufacturing a shape-stable, hollow-body-like element with a base region as a separating cap (22) for an electric magnet drive motor.

## Revendications

1. Procédé de formage d'un élément creux de forme stable pourvu d'une région de fond, comprenant les étapes suivantes :
a. prévoir un tube flexible en matériau textile ou matériau non tissé souple,
b. étrangler le diamètre du tube flexible en un point de sa longueur pour préformage au moins partiel de la région de fond de l'élément creux,
c. préformer le tube flexible étranglé pour obtenir une forme de pot par application de ce tube flexible sur un outil de formage dont la forme extérieure correspond à la forme intérieure de l'élément creux, et
d. stabiliser la forme de pot préformée du tube flexible sur l'outil de formage par réchauffage et refroidissement du tube flexible,
**caractérisé en ce que** l'on utilise comme matériau textile ou non tissé un matériau hybride qui présente une partie de fibres non déformable à chaud et une partie de fibres déformable à chaud.

2. Procédé selon la revendication 1, **caractérisé en ce que** la partie de fibres non déformable à chaud est une fibre de verre ou de carbone et **en ce que** la partie de fibres déformable à chaud est un polypropylène ou un sulfure de polypropylène sous forme fibreuse.

3. Procédé selon la revendication 1 ou 2, **caractérisé en ce que** la couche de matière plastique appliquée sur le matériau textile ou non tissé est réalisée par projection sur le tube flexible creux d'une matière thermoplastique ou duroplastique chauffée et par application de pression sur la matière plastique appliquée par projection.

4. Procédé selon l'une des revendications 1 à 3, **caractérisé en ce que** l'étranglement du tube flexible est opéré par torsion d'au moins un tronçon de longueur du tube flexible autour de son axe longitudinal.

5. Procédé selon l'une des revendications 1 à 3, **caractérisé en ce que** l'étranglement du tube flexible est obtenu par application d'un anneau.

6. Procédé selon l'une des revendications 1 à 3, **caractérisé en ce que** l'étranglement du tube flexible est opéré par application d'un noeud de fil.

7. Procédé selon l'une des revendications 1 à 6, **caractérisé en ce que** l'étranglement du tube flexible est opéré dans la région de son axe longitudinal, créant ainsi deux tronçons de longueur du tube flexible, et **en ce que** l'un des tronçons de longueur est retourné sur l'autre tronçon de longueur pour former un tube flexible à double couche.

8. Procédé selon la revendication 1, **caractérisé en ce que** le réchauffage du tube flexible préformé en forme de corps creux est opéré à une température de 200°C à 400°C.

9. Procédé selon l'une des revendications 1 à 7, **caractérisé en ce que**, dans la région du point de rétrécissement du tube flexible étranglé, on utilise un élément en forme de manchon pour former un passage axial dans la région de fond de l'élément, de façon telle que le centre de ce composant en forme de manchon coïncide avec l'axe médian longitudinal de l'élément creux à réaliser.

10. Procédé selon la revendication 9, **caractérisé en ce que** l'élément en forme de manchon utilisé est un élément en métal ou en matière plastique.

11. Procédé selon la revendication 8 ou 9, **caractérisé en ce que** l'élément en forme de manchon utilisé est un coussinet de palier.

12. Procédé selon la revendication 7, **caractérisé en ce qu'**au niveau de la région d'extrémité non rétrécie du tube flexible étranglé est utilisé un élément de raccordement de forme annulaire présentant une partie cylindrique de façon telle que cette partie cylindrique est située entre les deux tronçons de longueur du tube flexible ramenés l'un sur l'autre.

13. Utilisation du procédé selon au moins l'une des revendications 1 à 14 pour la réalisation d'un élément creux de forme stable comportant une région de fond (10) sous forme de chemise d'entrefer (15) pour un moteur électrique par voie humide.

14. Utilisation du procédé selon au moins l'une des revendications 1 à 14 pour la réalisation d'un élément creux de forme stable comportant une région de fond (10) sous forme de calotte de séparation (22) pour un moteur d'entraînement magnétique.
